(19) **Europäisches Patentamt / European Patent Office / Office européen des brevets**

(11) **EP 4 583 394 A1**

(12) **EUROPEAN PATENT APPLICATION**

(43) Date of publication:
**09.07.2025 Bulletin 2025/28**

(21) Application number: **24150655.9**

(22) Date of filing: **08.01.2024**

(51) International Patent Classification (IPC):
**H02M 11/00** $^{(2006.01)}$

(52) Cooperative Patent Classification (CPC):
**H02M 11/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NXP B.V.**
**5656 AG Eindhoven (NL)**

(72) Inventors:
• **Villar Piqué, Gerard**
  **5656AG Eindhoven (NL)**
• **Snijder, Bart**
  **5656AG Eindhoven (NL)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire S051 9NJ (GB)**

(54) **POWER SUPPLY CIRCUITS METHODS AND CONTROLLERS, FOR AN INTERMITTENT OR PULSED LOAD**

(57)  Controllers, power supplies and methods are disclosed for a power supply circuit having an energy storage device and for a load with a pulsed load profile, the controller configured to: control a charging circuit for supplying a charging current to the energy storage device for recharging the energy storage device; receive a signal indicative of a repetition rate of the pulsed load; and change the charging current in response to a change in the repetition rate of the pulsed load.

Fig. 4

EP 4 583 394 A1

## Description

Field

The present disclosure relates to methods, controllers and power supplies for providing energy pulses to a load having a pulsed load profile.

Background

Various electrical applications require a pulsed energy supply. Nonlimiting examples include industrial and medical pumps, for providing, periodically, a rotation or translation of part of a machine. One such application is that of medical dosimetry, for intermittent or periodic application, or dose, of a fluid such as a painkiller or insulin.

Increasingly, medical dosimetry devices such as insulin pumps are being developed to be lightweight and portable, or even internal to the patient, or subcutaneous. The supply of power to such devices is subject to an increasingly stringent set of constraints; for example, devices which are internal to the patient cannot be readily accessed to change a battery. Moreover, there may well be space or volume constraints. The intermittent power requirement on such devices may be relatively high, for instance an energy pulse may be required to be delivered in a relatively short space of time, corresponding to a relatively high power delivery level. One solution to this problem is to provide an intermediate energy storage device which is able to provide an energy pulse at a high power level and be slowly recharged or "trickle charged" from an energy or power source such as battery which may not be up to provide such a high power Optimisation of battery lifetime, and equivalently battery capacity reduction for equal lifetime, is of increasing importance for such devices.

Summary

According to a first aspect of the present disclosure, there is provided a controller, for a power supply circuit having an energy storage device and for a load with a pulsed load profile, the controller configured to: control a charging circuit for supplying a charging current to the energy storage device for recharging the energy storage device; receive a signal indicative of a repetition rate of the pulsed load; and change the charging current in response to a change in the repetition rate of the pulsed load. By changing the charging current in response to a change in the repetition rate of the pulsed load, it may be possible to optimize the current drawn by the power supply circuit from an energy generation or storage device such as a battery, and thereby reduce or limit degradation in the battery, for instance degradation of discharge capacity, over time. This may in turn prolong the lifetime of the storage device.

In one or more embodiments, changing the charging current in response to a change in the repetition rate of the pulsed load comprises: increasing the charging current in response to an increase in the repetition rate, and decreasing the charging current in response to a decrease in the repetition rate. As used herein a repetition rate of the pulsed load may refer to a repetition rate at which the load draws energy pulses from the energy storage device. Since a lower charging current in general may require drawing energy from an energy storage device such as a battery at a lower rate, and since battery degradation generally is worse for higher currents, this may help to prolong the battery lifetime.

In one or more embodiments, the increase of the charging current and the decrease of the charging current are proportional to the respective increase and decrease of the repetition rate. This may provide an optimum control methodology. In one or more other embodiments, the increase of the charging current and the decrease of the charging current are fixed. A fixed increase or decrease may be particularly simple to implement.

One or more embodiments may further comprise, in response to a change in a repetition rate of the pulse load, calculating a charging current, being a one of an increased charging current and a decreased charging current, required in order to charge the energy storage device to a predetermined level in a period corresponding to a period between successive pulses of the pulsed load. Choosing a charging current which restores the predetermined charging level to being fully charged or optimally charged to a target voltage of the energy storage device, within a single period of the pulsed load, may minimise the amount of time that the system is running non-optimally.

In one or more embodiments, the signal indicative of repetition rate of the pulsed load is a load pulse signal. In one or more other embodiments, the signal indicative of a repetition rate of the pulse load is a signal indicative of a drop in voltage of an output of the energy storage device. It is envisaged that the controller may determine the repetition rate by any one of several methods.

According to a second aspect of the present disclosure, there is provided a power supply circuit, comprising the controller as claimed in any preceding claim, the charging circuit, and the energy storage device. In one or more embodiments the charging circuit is a DC-DC converter. In one or more other embodiments, the charging circuit is one of a continuous time voltage regulator, and a controllable current source. In general, embodiments of the present disclosure may be used to advantage with a wide range of charging circuits.

According to a third aspect of the present disclosure, there is provided a method of controlling a power supply circuit having an energy storage device and for a load with a pulsed load profile, the method comprising: controlling a charging circuit for supplying a charging current to the energy storage device for recharging the energy storage device; receiving a signal indicative of a repetition rate of the pulsed load; and changing the charging current in response to a change in the repetition rate of the pulsed load.

In one or more embodiments, changing the charging current in response to a change in the repetition rate of the pulse load comprises: increasing the charging current in response to an increase in the repetition rate, and decreasing the charging current in response to a decrease in the repetition rate.

In one or more embodiments, the increase of the charging current and the decrease of the charging current are proportional to the respective increase and decrease of the repetition rate. In one or more other embodiments, the increase of the charging current in the decrease of the charging current are fixed.

In one or more embodiments, the method may further comprise in response to a change in a repetition rate of the pulse load, calculating a charging current in order to charge the energy storage device to a predetermined level in a period corresponding to a period between successive pulses of the pulsed load.

According to a fourth aspect of the present disclosure, there is provided a power supply circuit for a load with a pulsed load profile, the power supply circuit comprising: a feedback mechanism indicative of a repetition rate of the pulsed load; an energy storage unit, configured to supply energy pulses to the load; a charging circuit, configured to supply a current to the energy storage unit for recharging the energy storage unit; and a controller, configured to control the charging circuit, to change the current in response to a change in the repetition rate of the pulse load.

The energy storage unit may be a capacitor. The controller may be configured to increase the charging current in response to an increase in the repetition rate, and to decrease the charging current in response to a decrease in the repetition rate. The increase of the charging current and the decrease of the charging current may proportional to the respective increase and decrease of the repetition rate.

There may be provided a computer program, which when run on a computer, causes the computer to configure any apparatus, including a circuit, controller, sensor, filter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software implementation may be an assembly program.

The computer program may be provided on a computer readable medium, which may be a physical computer readable medium, such as a disc or a memory device, or may be embodied as another non-transient signal.

These and other aspects of the invention will be apparent from, and elucidated with reference to, the embodiments described hereinafter.

Brief description of Drawings

Embodiments will be described, by way of example only, with reference to the drawings, in which

FIG. 1 illustrates, schematically, a circuit including a load which requires a pulsed energy supply;
FIG. 2 shows a conventional power supply circuit for a system such as that shown in FIG. 1;
FIG. 3 shows a power supply circuit according to one or more embodiments of the present disclosure;
FIG. 4 shows, conceptually, a secondary control loop;
FIG. 5 shows the effect of the control in the case of a decrease in the repetition rate of load pulses;
FIG. 6 shows a various signals, illustrating operation of a power supply circuit according to one or more embodiments of the present disclosure;
FIG. 7 plots the change, in charging current between successive load pulses against value or magnitude of the change in the repetition rate, for various control methods according to embodiments of the present disclosure; and
FIG. 8 shows various signals similar to those in FIG. 6, resulting from a decrease in the periodicity of the load pulses.

It should be noted that the FIG.s are diagrammatic and not drawn to scale. Relative dimensions and proportions of parts of these FIG.s have been shown exaggerated or reduced in size, for the sake of clarity and convenience in the drawings. The same reference signs are generally used to refer to corresponding or similar features in modified and different embodiments

Detailed description of embodiments

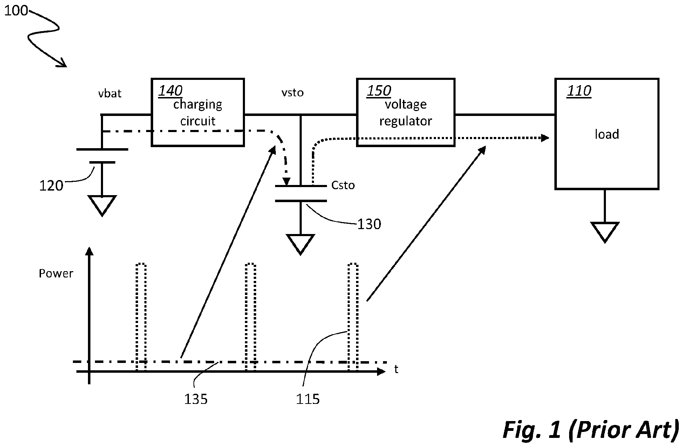

FIG. 1 illustrates, schematically, a circuit 100 including a load 110 which requires a pulsed energy supply. As illustrated, the load requires a pulsed supply of energy comprising periodic, or intermittent energy, pulses 115. The load is an example of a heavily duty-cycled system which achieves very low power on average consumption, for instance by remaining in an "off" or "sleep" mode for long periods until an event or time signal wakes them up, such that they can execute an operation or activity requiring the pulse of energy for a short time and go back to sleep.

Energy is provided to the load from a power supply, in this case a battery 120. In the context of a small or weak energy or power source, such as a small battery or small energy scavengers with limited output power, it is typically required to have in the system a reservoir of energy, such as energy storage unit 130, which can accumulate the low power provided by the energy or power source during the long sleeping times, and supply the peak power required by the load to perform its activity. Energy storage unit 130 may be, as shown, a capacitor, or a group of capacitors. A common approach is to charge the capacitor slowly, as illustrated at 135, either directly from the energy or power source or battery 120, or via a charging circuit 140 such as a DC-DC converter. The details of the circuit may depend on the size of the capacitor, the required stability of the voltage supply to the load, and the required energy efficiency of the process overall. A voltage regulator 150, or other means to separately control the voltage from the energy storage unit 130 to the load 110, may be provided.

For the circuit to operate properly, the current charging the energy storage unit 130 must be sufficiently high to match the average current required by the load. This may be difficult to predict, and so a relatively high charging current may be selected in order to accommodate the worst foreseeable case.

Some energy or power sources such as small batteries have an energy supply capability which depends on the rate of supply of the current. Thus a suboptimal (for instance an overestimated) charging current for the energy storage unit 130 may result in a shorter battery lifetime of the overall circuit.

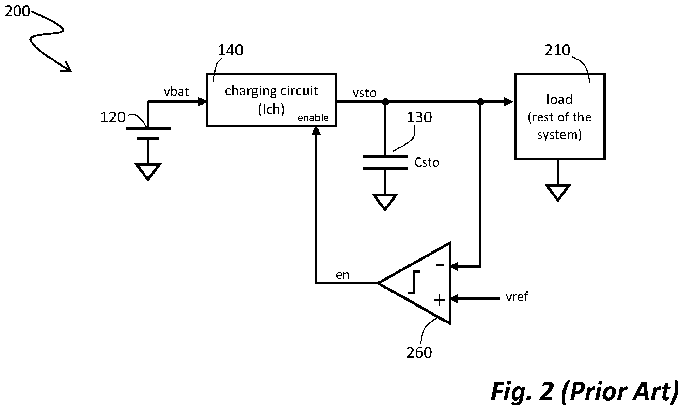

FIG. 2 shows a conventional power supply circuit 200 for a system such as that shown in FIG. 1. The power supply or battery 120 provides current to a charging circuit 140, at a voltage vbat. When enabled, the charging circuit provides a charging current Ich, which is generally fixed or predetermined, to the capacitor or energy storage unit 130 at a variable voltage vsto. The voltage is available to the rest, 210, of the system which may be a load directly, or may include for example a voltage regulator, such as that shown in FIG. 1, connected to a load. The variable voltage vsto is connected to one input terminal of a comparator 260. The other input of comparator 260 is connected to a reference voltage vref. The comparator provides an output en to the charging circuit 140, in order to enable the charging circuit 140 to operate provided the voltage vsto is lower than the reference voltage vref. Once the voltage vsto reaches vref, corresponding to a fully, or appropriately to a target level, charged state of the energy storage unit 130, the charging circuit 140 is disabled. Of course, the skilled person will appreciate, that instead of measuring the actual voltage of voltage levels such as vsto or vbat, it may be more convenient to use scaled versions of one or more of these voltages, for example by introduced voltage dividers, for comparison with a smaller reference level vref.

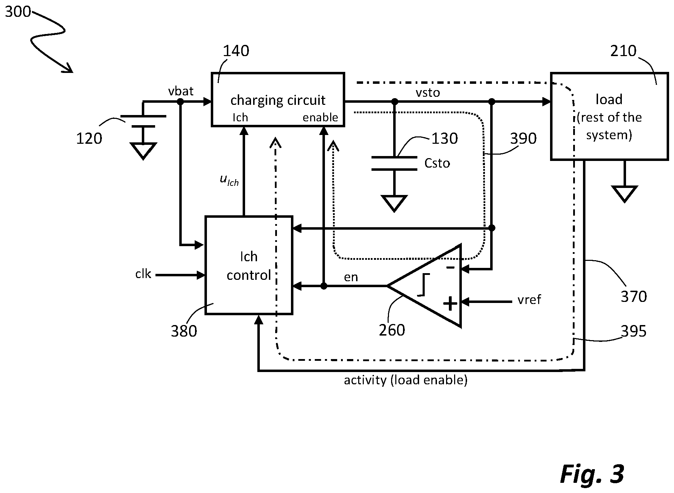

FIG. 3 shows a power supply circuit according to one or more embodiments of the present disclosure. Similar to FIG. 2, the FIG. shows a power supply or battery 120 which supplies a current at a voltage vbat to a charging circuit 140 such as a DC-DC converter. In other embodiments, the charging circuit may take a different form. For example, the charging circuit may be, without limitation, one of a continuous time voltage regulator, and a controllable current source. When enabled, the charging circuit provides a charging current to the capacitor or energy storage unit 130 at a variable voltage of vsto. The charging circuit 140 is enabled or disabled according to the state of the output en of a comparator 260, which compares the voltage vsto with a reference voltage vref. The enabling/disabling thus may be described as an inner, or primary, control loop 390. The power supply circuit 300 includes a feedback mechanism 370, which may as shown be from the load or rest 210 of the system, to a controller 380. The feedback mechanism 370 is indicative of a repetition rate of pulses of the pulsed load. The controller 380 controls the charging circuit, and in particular the charging current Ich supplied of the charging circuit. In dependence on the repetition rate of the pulse load. The controller is configured to change the charging current in response to a change in the repetition rate of the pulsed load. The power supply circuit thus implements a secondary, or outer, control loop 395 which modifies the charging current in dependence on the state of the system. In particular, the controller 380 may adjust the charging circuit 140 to supply a higher charging current in response to an increase in the repetition rate of the pulses of the load, and to supply a lower charging current in response to a decrease in the repetition rate of the pulses of the load.

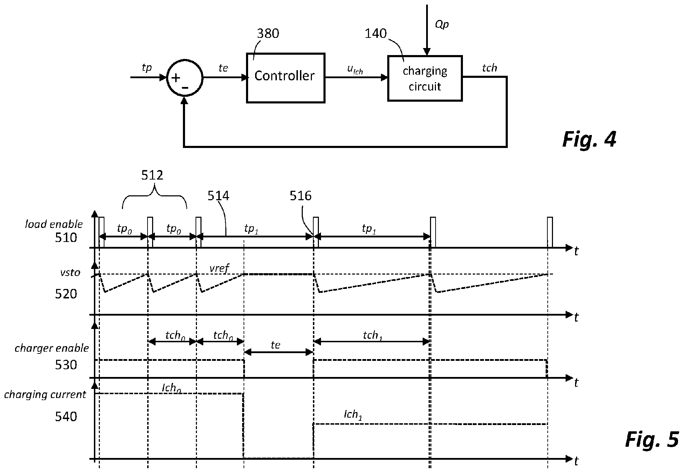

FIG. 4 shows, conceptually, the secondary control loop 395. The controller 380 provides one or more control signals uich to the charging circuit 140, such that, when an energy pulse is drawn by the load, the charging circuit 140 provides a charging current for an interval tch. Depending on the application, and in particular on the nature of the charging circuit 140, the control signal or signals uich could take a variety of forms. For example, uich could take the form of the timing control signals to high & low-side FETs of a half-bridge DC-DC converter. Alternatively, uich could be a single control voltage or current for a time-continuous current controller. Ideally, and in order to minimise the charging current, the current should be specified so as to replenish the energy storage unit 130 completely just in time for the subsequent energy pulse drawn by the load. That is to say, for a load pulse repetition rate of tp, in steady state tp = tch. Any error, te, between tp and tch is provided back to the controller 380 to adjust the control signal or signals uich to the charging circuit 140. The control loop reacts to changes to average current consumption by the load, and in particular changes to the repetition rate affected tp, or changes to the energy delivery per pulse which may be seen in this control loop as perturbations Qp to the charging circuit. In particular, the total energy in each energy pulse consumed by the load may vary between pulses; that is to say Qp it is not necessarily constant or fixed. This will be discussed in more detail hereinbelow, although in order to aid in the understanding of the present disclosure, in the following examples it will be assumed that the energy pulses are constant.

FIG. 5 shows the effect of the control in the case of a decrease in the repetition rate of load pulses. At 510 is shown a series of intermittent pulses of the load. On the left part of the FIG., shown at 512, the power supply circuit is in steady state and the pulses occur with the periodicity of $tp_0$, that is to say they have a repetition rate of $1/tp_0$. After a few pulses, the repetition rate decreases to $1/tp_1$, that is to say they occur with the periodicity of $tp_1$.

At 520 is shown the voltage vsto at the energy storage unit 130. During each load pulse, energy is drained from the storage unit, the voltage of which falls below the fully charged value vref by, in each case, the same voltage drop provided the energy transferred per pulse, Qp, is constant. The charging circuit is enabled since the voltage vsto is less than the reference voltage vref, so between the load pulses, the voltage vsto increases to reach vref just in time for the next load pulse. Plot 530 depicts the charge enable signal en, which thus remains on, or high, throughout this period, such that charging circuit 140 is thus permanently on during this period. The charging circuit provides a charging current to the energy storage unit 130 of $Ich_0$, as shown on plot 540.

As shown at 514, the repetition rate of the pulses may decrease to $1/tp_1$, that is to say they occur with the periodicity of $tp_1$. Since $tp_1$ is greater than $tp_0$, and $tch_0$ is equal to $tp_0$, the voltage vsto returns to the reference voltage level vref, prior to the next load pulse. As a result, the charge enable signal en goes low, and the charging circuit 140 is disabled. The voltage vsto at the energy storage unit output remains stable at the voltage reference, until the next pulse of the pulsed load occurs at the end of the time period $tp_1$, as shown at 516. During this load pulse, the voltage vsto falls. The time, te, for which the enable signal en is low may then be used as a control parameter to determine the appropriate charging rate $Ich_1$ at which to control the output charging current from the charging circuit 140 such that the voltage vsto will reach the fully, or appropriately to a target level, charged level vref at the end of a subsequent period $tp_1$. Provided the control was previously in a settled state (that is to say, $Ich_0$ being such that $tch_0 = tpo$), the charging current can be calculated to be:

$$Ich_1 = Ich_0 * ( tp_0 / tp_1) = Ich_0 *(tp_0 /(tp_0 + te) ) \qquad (1).$$

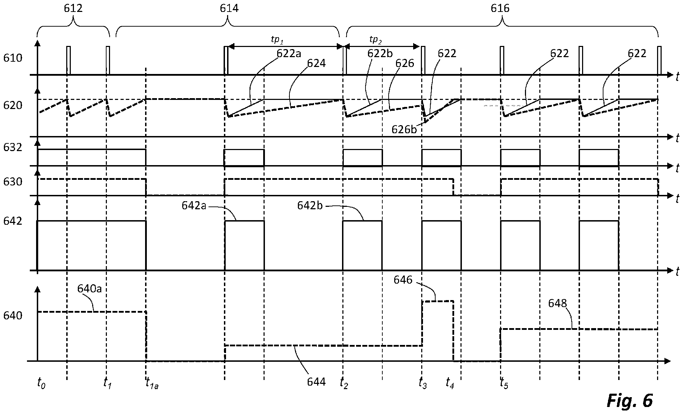

It will be appreciated, that the charging rate is adapted, or changed, so as to match the estimated repetition rate of the pulsed load, based on the previously observed repetition rate. For this and any subsequent reduction in the repetition rate (corresponding to a yet further increase in the time between load pulses), the voltage at the output of the energy storage device will always reach the reference voltage prior to the next pulse. However, in the case that there is an increase in the repetition rate the voltage will not reach the reference voltage before the next load pulse. This will be considered more detail with respect reference to FIG. 6

FIG. 6 shows various signals, illustrating operation of a power supply circuit according to one or more embodiments of the present disclosure. In particular the FIG. shows operation during both an increase and a decrease in the periodicity tp of the load pulses. Similar to FIG. 5, at 610 is shown a series of intermittent pulses of the load. At 620 is shown the voltage vsto at the energy storage unit 130, plot 630 depicts the charge enable signal en. For reference, the change in vsto over time according to conventional system is shown at 622, and the charge enable signal EN for a conventional system is shown at 632. At 640 is shown the charging circuit providing a charging current, to the energy storage unit 130, of Ich.

The first two time periods shown, at 612 between $t_0$ and $t_1$, and 614 between $t_1$ and $t_2$, respectively correspond to that shown in FIG. 5. The slower recharge rate, that is to say the lower charging current, which results from a decrease in the repetition rate over time period 614, relative to 612, is visible by the shallower gradient of the recharging 624 according to embodiments of the present disclosure, compared to that 622a in the conventional system. It should be noted that the relatively low battery current, 644, drawn over this period may be beneficial, compared to the charging current from a conventional system as in 642a.

At 616 is shown an increase in the repetition rate of the load pulse (relative to that in time period 614). That is to say, the interval between that load pulses at $t_2$ and $t_3$ (or $t_3$ and $t_5$) is less than during the time period 614. For a conventional power supply, as shown at 622b, the energy storage units 130 is recharged at the same rate as after any other pulse. And thus the current 642b from the battery or other power source 120 is the same as in the previous intervals, for example as shown at 642a. However according to embodiments of the present disclosure, the controller bases the recharge current 644 on the previous periodicity $tp_1$ (which is longer than the present interval $tp_2$). As a result, at the end of the interval, when the next load pulse occurs, the energy storage unit 130 has not fully recharged to the reference voltage vref. So the next energy pulse drawn from the energy storage unit 130 reduces the voltage vsto below the previous minimum voltage, as shown at 626b. To compensate this, the controller modifies uich to increase the charging current, as shown at 646. It will be appreciated that in this instance, because the energy storage unit 130 did not fully recharge during the last interval between the load pulses, the increase in charging current must be more than merely to make the current proportional to the repetition rate, in order to fully recharge the energy storage unit 130. The voltage vsto thus increases more rapidly back to vref, and once the voltage reaches vref the comparator 260 switches off the enable signal en to stop the charging, as shown

at $t_4$. The skilled person will appreciate that during this interval the battery must supply a greater power level than would be the case for a conventional, fixed battery current, situation.

Once the next load pulse occurs, since the energy storage unit 130 is fully recharged, the controller may set the charging current to be proportional to the previous repetition rate (that is to say inversely proportional to the time interval between $t_3$ and $t_5$). This current level, as shown at 648, is thus lower than the level 646 resulting from the need to recover the missing energy at t3, however it is higher than the current level 644, as the new repetition rate 616 is higher than in the time period 614.

In summary then, it can be seen that when the repetition rate is at a maximum due to the highest frequency of load pulses, as at 612, recharging according to embodiments of the present disclosure is the same as according to conventional methods. However, when the average load current (in other words the repetition rate of the load pulses) reduces, embodiments according to the present disclosure adapt to the requirements, by more slowly charging the energy storage unit 130, thereby improving, or not impairing, the battery discharge capacity, and the change occurs after just one single load pulse. Conversely, when the average load current increases, a method according to embodiments of the present disclosure requires somewhat more current than the conventional recharging method to compensate for the fact that it did not fully charge the energy storage unit 130 in the previous interval. However, this additional current is required for only a single cycle. And so overall although the transient higher recharging current may be detrimental, any resulting disadvantage is outweighed by the optimisation of the recharging current over most cycles. For applications in which the repetition rate is relatively constant, use of the methods according to embodiments of the present disclosure may provide a noticeable benefit in terms of minimising the current drawn from the battery or other energy supply thereby maximising the battery capacity.

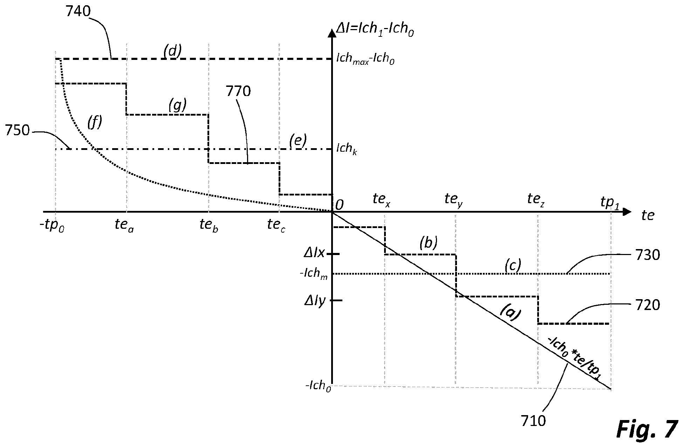

It will be appreciated that various alternative implementations of the above general concept may be implemented. Considering first the situation where the repetition rate of load pulses has decreased, relative to a previous repetition rate (which may typically, but not necessarily, be steady-state) such that tch < tp. Without limitation, at least three alternative methods may be adopted to adjust the recharging current. Various alternative embodiments will be discussed now, with reference to the right-hand side of FIG. 7. FIG. 7 plots the change, $\Delta I$, in charging current between successive load pulses, ie $\Delta I = Ich_1 - Icho$, against value or magnitude of the change te in the repetition rate, for various control methods according to embodiments of the present disclosure.

A first embodiment "(a)", shown at 710, is as described above: the secondary loop may be configured to measure the time between load pulses (tp) and the charging time (tch) using for example an external clock clk as shown in FIG. 3 or an internal time reference. As described above, the time difference te may be calculated since te = tp - tch, and the charging current modified in proportion to the difference, as indicated in equation (1):

$$Ich_1 = Ich_0 * ( tp_0 / tp_1) = Ich_0 \;*(tp_0 /(tp_0 + te) \;) \qquad\qquad (1).$$

Or equivalently:

$$Ich_1 = Ich_0 * \; ( 1 – te/tp_{1\_}). \qquad\qquad (1a).$$

In a second embodiment "(b)", shown at 720, the charging current may be reduced by a stepped amount in response to te being above or below predetermined threshold levels. Thus for example if the value of te is between te, and $te_y$, the charging current may be changed by a first amount $\Delta I_x$, if the value of te is between $te_y$ and $te_z$, the charging current may be changed by a second amount $\Delta I_y$, and so on.

In a third embodiment, "(c)", shown at 730, the charging current could be reduced by a fixed amount based simply on the sign of te (in other words whether te is negative). This embodiment is particularly simple and may be easy to implement since there would be no need to remeasure any time magnitude, rather, it would be necessary merely to observe whether the charging process is completed or not before the next load pulse is triggered. However, the solution may result "bouncing", or limit cycle oscillations around the optimal value which may be detrimental in some applications, and might result in a longer settling time of the secondary loop compared to other embodiments, resulting in a longer time interval over which the charging of the energy storage unit 130 is suboptimal.

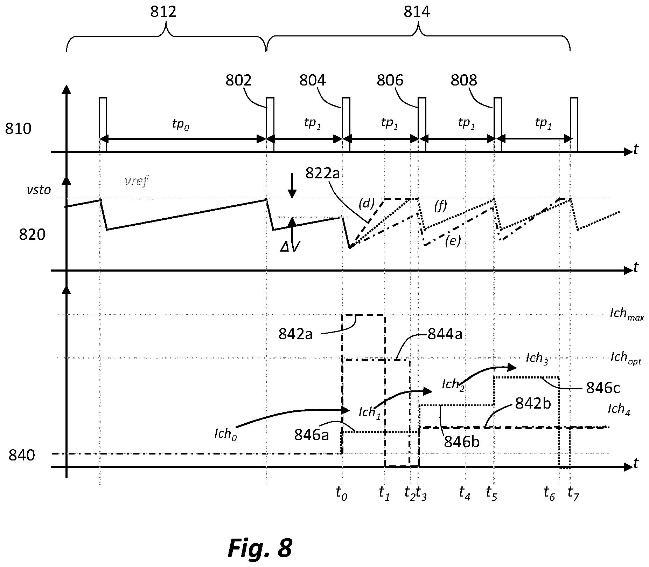

Turning now to situations in which the repetition rate of load pulses has increased relative to a previous repetition rate (which may typically, but not necessarily, be steady-state) such that tch > tp. This change is somewhat more complicated in that the charging rate which was optimal for the previous repetition rate does not completely charge the energy storage unit 130. Consequently, the charging time tch, required to fully recharge the energy storage device, is unknown because the charging process was not completed. Again various methods may be implemented according to the present disclosure some, of which will be described in more detail with reference to the left-hand side of FIG. 7, and FIG. 8.

FIG. 8 shows various signals similar to those in FIG. 6, resulting from a decrease in the periodicity tp of the load pulses. At 810 is shown a series of intermittent pulses of the load, initially at a periodicity of $tp_0$ over time period 812, and then changing to a reduced periodicity of $tp_1$, over time period 814, corresponding to an increased repetition rate. At 820 is shown the voltage vsto at the energy storage unit 130, and at 840 is shown the charging circuit providing a charging current, to the energy storage unit 130, of Ich.

During a first time interval, the charging current is optimised for the periodicity $tp_0$ of the load pulses, such that the voltage vsto on the energy storage unit 130 reaches the reference value vref just in time for the load pulse 802. The controller continues to recharge the energy storage unit 130 at the same rate during the next interval; however since this interval, $tp_1$, until the next load pulse 804 is shorter than the prior interval, vsto does not fully recover to vref but is lower by a value $\Delta V$, as shown. Various alternative control methods according to one or more embodiments may now be implemented. In one method, (d), shown at 740, it is detected that the load pulse is triggered while the charging circuit is still enabled. The maximum charging current $Ich_{max}$ is selected by the controller so that the voltage vsto on the energy storage unit 130 increases at the fastest rate, in order to ensure that vsto reaches the reference level vref before the next subsequent load pulse. As shown in FIG. 7, the increase in the charging current is then $Ich_{max} - Ich_0$. And as shown in FIG. 8, the current 842a results in a relatively fast rise of vsto, as shown at 822a, so that it reaches the reference voltage vref at a time t1 where t1<t3 (t3 being the start of the next subsequent load pulse 806). For the following pulse 808, the period $tp_1$ is now known, so provided that the subsequent pulses occur with a steady state periodicity, the current charging level 842b may be set so that vsto is restored to vref just at the moment the next load pulse 808 occurs at moment t5. To enable this embodiment, the maximum charging current, $Ich_{max}$, should be significantly larger than the maximum required by the load at the highest anticipated repetition rate. As a result, a maximum, or relatively high current is drawn from the power supply or battery 120, during the period from $t_0$ to $t_1$. However, this would only be for a single period, so any associated degradation of the battery could be expected to be relatively light.

An alternative embodiment, "(e)", is shown at 750 in FIG. 7. In this case, if the energy storage unit 130 is not fully charged before the load is triggered, the charging current is simply increased each cycle, by an amount $Ich_k$, which is either fixed (as shown), or depends linearly or non-linearly on $\Delta V$. In the case of the fixed increase, it may take several load pulse intervals in order to fully recharge the energy storage unit 130, and at the start of each interval the charging current increases, as shown, from $Ich_0 \rightarrow Ich_1$ (846a) $\rightarrow Ich_2$ (846b) $\rightarrow Ich_3$ (846c). This could result in longer settling time to an optimum charging current value, but would normally avoid requiring to use the maximum charging current.

Further alternative embodiments, "(f)", are shown at 760 in FIG. 7. In these cases, an optimum charging current, $Ich_{opt}$, to reach vref at the end of the time interval $tp_1$ may be determined as shown at 844a in FIG. 8, by use of additional information. For example, in a first case, if the capacitance value Csto the energy storage unit 130 and the voltage difference ($\Delta V$), between the target recharge level vref and the actual vsto at the moment that a new load event is triggered, are known, $Ich_1$ could be computed from:

$$Ich_1 = Ich_0 + (2.\Delta V.Csto) / tp_1 \qquad (2).$$

It will be appreciated that this embodiment requires a relatively accurate measurement of $\Delta V$, and that Csto needs to be known to, or calculable by, the controller. The latter could be achieved, for instance by, or perhaps using indirect measurement based on, the slopes of vsto.

In a second case, the new optimum charging current, $Ich_1$, could be calculated with reference to the previous charging current Icho, through

$$Ich_1 = Ich_0 . \{ 2(tp_0/ tp_1) -1\} \qquad (3).$$

It will be appreciated that this embodiment requires the storage of the previous interval $tp_0$. Offset against this is the potential advantage that the optimum charging current is found to give the shortest settling time.

The skilled person will appreciate that the second of these two cases is quite similar to the opposite or inverse of situation "(a)" for an increase of periodicity between load pulses in FIG. 4. Whereas when tch < tp (case "(a)"), both can be known as the charging process had time to end, in case of tch > tp the charging time is not known because the charging process was truncated before finishing by a load pulse (or at least its measurement is heavily distorted by it). Thus in "(f)", in absence of a known *tch*, $tp_0$ (time between 2 previous load events) is used, although this is based on the assumption that the loop was well settled (tp0 being equal or very close to tch0), which may not always be the case.

In a yet further, nonlimiting embodiment "(g)" 770, by measuring $tp_1$, and storing $tp_0$, different constant values could be used to increase $Ich_0$ based on the difference $tp_1$-$tp_0$ positioned against different threshold values. Again, as in the other left-hand side methods of Fig. 7, te is in practice tp1-tp0, because tch, that is the time to fully recharge the energy storage device, is not known.

As already mentioned and as will be familiar to those skilled in the art of process control loops, it may, in one or more embodiments, be appropriate to increase the charging current by slightly more than the optimum value and/or apply a hysteresis around the te=0 point in order to ensure the system settles without bouncing oscillation. Also, again as has been referred to hereinabove, in the case that tp<tch, the energy storage unit 130 may not be fully recharged between load pulses, and as a result the worst case drop in vsto may be greater than that in a conventional system. This should be taken into account when designing the whole system: the energy storage unit 130 should be able to supply more than one load pulse, without requiring to be refilled. It will be further appreciated that, for implementations in which the controller, and thus a secondary loop, can be pre-informed about an anticipated change in the repetition rate of load pulses, this information may be used by the controller in order to reduce the transients of this secondary loop. It will be appreciated that minimising the changes to the repetition rate of the load pulses may assist in maximising the optimisation of current and thus minimising any degradation of the power supply.

Furthermore, as briefly mentioned above with respect to FIG. 4, a wide variety of implementations of the charging circuit 140 are envisaged without this departing from the scope of the present disclosure. Moreover, various control methods for the charging circuit may be employed, such as and without limitation, in the case of a DC-DC converter, frequency control (fs) or on-time control (Ton). Thus the control signal or signals uich to the charging circuit may take a variety of forms, such as, without limitation: for a switched capacitor power converter - timing signals and/or size of floating capacitors and/or size of power switches, and/or number of modules used in parallel; for inductive DC-DC converters - timing signals; and for continuous time regulators of current sources - gate voltage of the pass device. Furthermore, the person skilled in the art of control loops will appreciate that it may be appropriate to include some form of hysteresis in the control in order to avoid bouncing or oscillation of the levels.

It will furthermore be appreciated that load pulses or events may, for some embodiments, also be detected by the charger being enabled by the primary loop. This way, in case of very slow activity, the discharge of the energy storage unit 130 by leakage or other ultralow power circuits may also be captured by the secondary loop and it may be possible that the charging current can also be adjusted based on this. In other words, it is not necessarily a requirement that the load consumption is exclusively pulsed. As an example, in case of continuous low power consumption from the load, the charging current would ideally tend to be the same as the load current, and the frequency of the charging events be mainly determined by the hysteresis of the loop, and the current difference at which it settles.

In a realistic implementation in which the performance of the charging circuit drops when processing very little power, the selectable charging current might be constraint to a minimum value greater than zero. In that case, the primary loop may simply stop the charging circuit when the capacitor is refilled.

In order to aid in understanding of the present disclosure, the description so far has focused on the case that the individual energy pulses from the load, also referred to as load pulses, are constant - that is to say they each draw the same energy from the energy storage unit 130. However, the present disclosure is not limited thereto, and the energy transferred during a load pulse, Qp, may vary between pulses. In this instance, the voltage drop in vsto resulting from each load pulse is not constant, but varies in proportion to the energy transfer Qp. The skilled person will appreciate that, since the energy pulses not directly measured but, in general, only the repetition rate or periodicity of the pulses, embodiments of the present disclosure can still accommodate varying load pulses, which may be considered a perturbation. It will also be understood that the smaller the perturbation in size or periodicity of the load pulses, the higher the potential benefit from methods according to the disclosure.

From reading the present disclosure, other variations and modifications will be apparent to the skilled person. Such variations and modifications may involve equivalent and other features which are already known in the art of control of low-power devices, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

It is noted that one or more embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Features which are described in the context of separate embodiments may also be provided in combination in a single embodiment. Conversely, various features which are, for brevity, described in the context of a single embodiment, may also be provided separately or in any suitable sub-combination.

For the sake of completeness it is also stated that the term "comprising" does not exclude other elements or steps, the term "a" or "an" does not exclude a plurality, a single processor or other unit may fulfil the functions of several means recited in the claims [delete if not relevant] and reference signs in the claims shall not be construed as limiting the scope of the claims. Furthermore, the word "may" is used in a permissive sense (i.e., meaning having the potential to), rather than the mandatory sense (i.e., meaning must). Similarly, the words "include," "including," and "includes" mean including, but not limited to.

**Claims**

1. A controller, for a power supply circuit having an energy storage device and for a load with a pulsed load profile, the controller configured to:

   control a charging circuit for supplying a charging current to the energy storage device for recharging the energy storage device;
   receive a signal indicative of a repetition rate of the pulsed load; and
   change the charging current in response to a change in the repetition rate of the pulsed load.

2. The controller according to claim 1, wherein changing the charging current in response to a change in the repetition rate of the pulsed load comprises:
   increasing the charging current in response to an increase in the repetition rate, and decreasing the charging current in response to a decrease in the repetition rate.

3. The controller according to claim 2, wherein the increase of the charging current and the decrease of the charging current are proportional to the respective increase and decrease of the repetition rate.

4. The controller according to claim 2, wherein a magnitude of the increase of the charging current and the decrease of the charging current are each constant, and independent of the respective increase and decrease of the repetition rate.

5. The controller according to claim 2, wherein a magnitude of the increase of the charging current and the decrease of the charging current are each stepped, the respective magnitude being dependent of the respective increase and decrease of the repetition rate.

6. The controller according to claim 1, further comprising, in response to a change in a repetition rate of the pulsed load, calculating a charging current, being a one of an increased charging current and a decreased charging current, required in order to charge the energy storage device to a predetermined level in a period corresponding to a period between successive pulses of the pulsed load.

7. The controller according to any preceding claim, wherein the signal indicative of repetition rate of the pulsed load is a load pulse signal.

8. The controller according to any of claims 1 to 6, wherein the signal indicative of a repetition rate of the pulsed load is a signal indicative of a drop in voltage of an output of the energy storage device.

9. A power supply circuit, comprising the controller as claimed in any preceding claim, the charging circuit, and the energy storage device.

10. The power supply circuit according to claim 9, wherein the charging circuit is a DC-DC converter.

11. The power supply circuit according to claim 9, wherein the charging circuit is one of a continuous time voltage regulator, and a controllable current source.

12. A method of controlling a power supply circuit having an energy storage device and for a load with a pulsed load profile, the method comprising:

    controlling a charging circuit for supplying a charging current to the energy storage device for recharging the energy storage device;
    receiving a signal indicative of a repetition rate of the pulsed load; and
    changing the charging current in response to a change in the repetition rate of the pulsed load.

13. The method of claim 12, wherein changing the charging current in response to a change in the repetition rate of the pulsed load comprises:
increasing the charging current in response to an increase in the repetition rate, and decreasing the charging current in response to a decrease in the repetition rate.

14. The method of claim 13, wherein the increase of the charging current and the decrease of the charging current are proportional to the respective increase and decrease of the repetition rate.

15. The method of claim 13, further comprising, in response to a change in a repetition rate of the pulsed load, calculating a charging current in order to charge the energy storage device to a predetermined level in a period corresponding to a period between successive pulses of the pulsed load.

Fig. 1 (Prior Art)

*Fig. 2 (Prior Art)*

300

140

vbat

charging circuit

Ich          enable

120

$u_{Ich}$

vsto

210

load
(rest of the
system)

130

Csto

390

clk

Ich
control

en

vref

370

395

380

260

activity (load enable)

*Fig. 3*

**Fig. 4**

**Fig. 5**

Fig. 6

Fig. 7

**Fig. 8**

Europäisches
Patentamt

European
Patent Office

Office européen
des brevets

## EUROPEAN SEARCH REPORT

**Application Number**

EP 24 15 0655

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 087 811 A (CRAWFORD IAN D [US] ET AL) 11 July 2000 (2000-07-11) * column 6, line 4 - column 9, line 58; figures 2, 3 * | 1-15 | INV. H02M11/00 |
| X | US 2023/369976 A1 (ZELIG ROBERT [IL] ET AL) 16 November 2023 (2023-11-16) * paragraphs [0126], [0151] - [0157]; figures 1-4 * | 1,12 | |
| X | WO 2020/245260 A1 (SCANDINOVA SYSTEMS AB [SE]) 10 December 2020 (2020-12-10) * figures 7, 8 * | 1,12 | |

**TECHNICAL FIELDS SEARCHED (IPC)**

H02M

The present search report has been drawn up for all claims

| Place of search | Date of completion of the search | Examiner |
|---|---|---|
| The Hague | 5 June 2024 | van Wesenbeeck, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 0655

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2024

| Patent document cited in search report | | Publication date | Patent family member(s) | | Publication date |
|---|---|---|---|---|---|
| US 6087811 | A | 11-07-2000 | NONE | | |
| US 2023369976 | A1 | 16-11-2023 | EP | 4280439 A1 | 22-11-2023 |
| | | | US | 2023369976 A1 | 16-11-2023 |
| WO 2020245260 | A1 | 10-12-2020 | NONE | | |

For more details about this annex : see Official Journal of the European Patent Office, No. 12/82